# FASCICULE DE BREVET EUROPEEN

(11) **EP 2 445 732 B1**
(45) Date de publication et mention de la délivrance du brevet: **03.04.2013**
(21) Numéro de dépôt: 10734263.6
(22) Date de dépôt: 17.06.2010
(51) Int. Cl.: B60C 23/04

(54) **VALVE INTEGRANT UN CAPTEUR**
VENTIL MIT INTEGRIERTEM SENSOR
VALVE INTEGRATING A SENSOR

(30) Priorité: 26.06.2009 FR 0954394
(43) Date de publication de la demande: 02.05.2012
(73) Titulaire: Schrader S.A.S., 25300 Pontarlier (FR)
(72) Inventeur: GROSLAMBERT, David, F-25290 Ornans (FR)
(74) Mandataire: Brungard, Yves Francois
(86) Numéro de dépôt international: PCT/FR2010/051217
(87) Numéro de publication internationale: WO 2010/149902

(56) Documents cités:
- EP-A- 0 301 443
- WO-A-2009/057214
- US-B1- 6 199 575
- US-B1- 7 328 609

## Description

L'invention concerne une valve incorporant un capteur sans fil, c'est-à-dire interrogeable à distance sans connexion filaire, tel qu'un capteur de pression et/ou de température.

Il est connu une valve permettant d'obturer ou d'ouvrir sur commande un passage de fluide tel qu'un gaz, de l'air ou du liquide. Elle comporte par exemple un ensemble mobile en translation dans un corps, constitué d'une tige formant clapet par l'intermédiaire d'une pièce d'étanchéité venant en appui sur un siège du corps. Lorsque la pièce d'étanchéité est plaquée contre le siège, le passage est obturé. Lorsque la tige est manoeuvrée, par exemple par un appui mécanique, le passage est ouvert pour laisser passer le fluide.

Le contact de la pièce d'étanchéité montée sur la tige contre le siège est assuré par exemple par la pression du fluide lui-même, éventuellement assisté par un ressort qui agit sur la tige. La manoeuvre de la tige peut être commandée manuellement, par un actionneur ou par le fluide lui-même lorsque la pression du fluide tend à faire décoller l'embase et son élément d'étanchéité par rapport au siège.

On connaît des capteurs basés sur des technologies à ondes acoustiques de surface ou à ondes élastiques guidées permettant de mesurer diverses grandeurs physiques telles que la température ou la pression. Le document WO 93/13495 montre un exemple de réalisation de capteur de ce type. Le fonctionnement de ce type de capteur n'est pas détaillé ici, mais on indique simplement que le capteur est soumis à une impulsion d'ondes électromagnétiques émise par un système d'interrogation, et que le capteur réémet une réponse en fonction de son état. L'analyse de la réponse permet d'accéder à la grandeur mesurée. Un élément essentiel au fonctionnement est une antenne qui permet de capter l'onde électromagnétique et de réémettre la réponse.

Le document FR 2 843 562 montre un système de montage adapté à un tel capteur sur une roue de véhicule pour mesurer la pression à l'intérieur d'un pneumatique. Le capteur est embarqué dans une capsule doté d'une couronne. Une valve traverse la couronne et un orifice de la jante de la roue et plaque le capteur contre la jante.

La capsule de ce capteur est décentrée par rapport à ses moyens de fixation, ce qui la rend sensible aux accélérations diverses auxquelles elle peut être soumise et la rend fragile. De plus, la capsule doit être maintenue en place tant que la valve n'est pas installée. De plus, la taille de la capsule que l'on souhaite petite impose une antenne de dimensions réduites et limite la distance entre le capteur et le système d'interrogation.

Le document US 7,328,609 A1 montre une valve du type décrit précédement et comportant un circuit transmetteur de pression Sans fil monté sur l'ensemble mobile avec le capteur de pression. Le transmetteur est connecté à la tige qui fait fonction d'antenne.

Le document WO 2009/057214 A1 montre une antenne, une pile et un circuit de commande qui sont incorporés dans le bouchon de la valve. Cet ensemble est relié électriquement au capteur qui est positionné le long de la tige de la valve.

L'invention vise à fournir une valve incorporant un capteur qui soit simple à monter, qui ne soit pas sensible aux sollicitations mécaniques et dont la distance de communication avec le système d'interrogation ne soit pas trop limitée.

A cet effet, l'invention a pour objet une valve incorporant un capteur interrogeable à distance sans connexion filaire, dans laquelle un corps comporte un siège, un ensemble mobile comportant une tige formant un clapet avec ledit siège, par l'intermédiaire d'une pièce d'étanchéité pour obturer et libérer sur commande un passage de fluide. Le capteur est fixé sur une embase d'extrémité inférieure de la tige.

Ainsi, la partie sensible du capteur est logée directement à l'intérieur de la valve. De plus, le capteur étant placé sur l'extrémité inférieure de la tige munie de l'élément d'étanchéité formant clapet, il est ainsi placé du côté du fluide retenu par la valve, et est donc soumis aux mêmes conditions que le fluide lui-même. Il n'est pas nécessaire de prévoir une opération spécifique de montage du capteur. L'opération de montage de la valve réalise en même temps le montage du capteur. De plus, le capteur est monté directement sur une pièce de la valve, ce qui dispense d'utiliser une capsule et de décentrer le capteur par rapport à ses moyens de fixation, selon l'art antérieur.

Selon une disposition avantageuse, un premier élément d'antenne logé dans la valve est connecté au capteur. L'antenne n'est ainsi pas limitée en taille par la taille même du capteur, mais peut s'étendre au-delà, en fonction des dimensions de la valve.

De manière particulière, la tige est conductrice électriquement et est connectée électriquement au capteur, de manière à former le premier élément d'antenne. La tige, de forme allongée, forme ainsi directement une partie de l'antenne, sans l'ajout de pièce spécifique pour la fonction d'antenne.

De manière complémentaire, un bouchon est fixé de manière amovible sur le corps, le bouchon comportant un élément conducteur en contact électrique avec la tige de manière à former avec la tige le premier élément d'antenne. On utilise ainsi directement une autre pièce déjà existante pour agrandir encore l'élément d'antenne.

Le bouchon peut être obtenu par exemple par surmoulage de l'élément conducteur.

Selon une autre disposition, le bouchon est métallique et constitue l'élément conducteur. Il forme ainsi, du fait qu'il est conducteur, une extension du premier élément d'antenne au-delà de la tige. Il est alors nécessaire que la connexion du bouchon sur le corps soit isolée électriquement.

Selon une autre disposition encore, le bouchon comporte un corps de bouchon en matière isolante et contenant l'élément conducteur. Il est alors possible que le corps de la valve soit conducteur, le corps de bouchon réalisant une isolation électrique entre le fil conducteur et le corps de la valve.

De manière particulière, le corps est métallique et est isolé de la tige par une bague isolante autour de la tige. La bague isolante permet que la tige remplisse son rôle d'antenne même si la tige est en appui dans son logement, sans interférer avec le corps.

De manière complémentaire, l'élément mobile comporte une pièce d'étanchéité en matière isolante interposée entre l'embase de la tige et le siège. En plus de la fonction d'étanchéité, la pièce d'étanchéité réalise une isolation électrique entre la tige et le corps, également pour la même raison que précédemment.

Selon un perfectionnement, l'élément conducteur du bouchon comporte un élément élastique pour assurer le contact électrique avec la tige. On évite ainsi de provoquer un déplacement de la tige lorsqu'elle est en contact avec le bouchon, lequel déplacement pourrait provoquer des défauts d'étanchéité.

De manière particulière, le corps est métallique au moins en partie. Ceci peut être rendu nécessaire pour des questions de résistance mécanique.

Selon une autre disposition, un deuxième élément d'antenne est connecté au capteur et situé à l'opposé du premier élément par rapport au capteur, les deux éléments d'antenne étant isolés électriquement. Le deuxième élément complète avantageusement le premier élément et augmente l'efficacité du capteur.

Selon une disposition particulière, le deuxième élément d'antenne comporte un ressort en appui contre le capteur et en contact électrique avec ledit capteur. Le ressort a ainsi deux fonctions, celle de maintenir l'embase en appui contre le siège, par l'intermédiaire de la pièce d'étanchéité, et celle de connexion électrique.

De manière complémentaire, la valve comporte un embout électriquement conducteur, sur un épaulement intérieur duquel le ressort est en appui, ledit embout étant fixé sur le corps et complétant le deuxième élément d'antenne. L'embout sert par exemple à la fixation de la valve sur un autre élément. Il sert en plus à augmenter la taille du deuxième élément d'antenne.

Selon une caractéristique complémentaire, le corps comporte une base réalisée en matière isolante électriquement et séparant l'embout du premier élément d'antenne. On peut ainsi réaliser facilement la séparation électrique entre les deux éléments d'antenne de part et d'autre de la base du corps.

L'invention sera mieux comprise et d'autres particularités et avantages apparaîtront à la lecture de la description qui va suivre, la description faisant référence aux dessins annexés parmi lesquels :
- la figure 1 est une vue en coupe d'une valve selon un premier mode de réalisation de l'invention ;
- la figure 2 est une vue similaire à la figure 1 d'un deuxième mode de réalisation de l'invention.

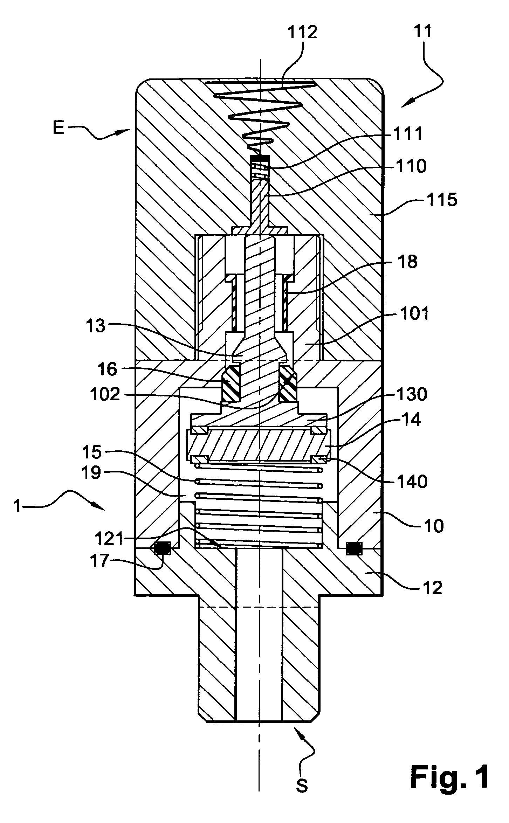

Une valve 1 selon un premier mode de réalisation de l'invention, montrée sur la figure 1, est destinée à obturer un réservoir de fluide, non représenté, et à permettre le remplissage ou la vidange du réservoir. La valve 1 comporte une entrée E à laquelle un tuyau de gonflage peut être connecté et une sortie S destinée à déboucher à l'intérieur du réservoir. A titre d'exemple non limitatif, ce réservoir peut être un pneumatique d'une roue de véhicule ou un vase d'expansion à membrane destiné aux installations de chauffage.

La valve 1 comporte un corps 10 métallique de forme générale tubulaire. Du côté de l'entrée E, le corps 10 comporte une partie filetée 101 sur laquelle un bouchon 11 est vissé de manière amovible. Du côté de la sortie S, un embout 12 est vissé dans le corps 10 sur un filetage intérieur. L'embout 12 est également métallique et un joint torique 17 d'étanchéité est interposé entre le corps 10 et l'embout 12. L'embout 12 est percé axialement et débouche dans une chambre de passage 19 délimitée dans le corps 10.

Une tige 13, formant une partie du clapet, de forme de révolution est montée coulissante dans le corps 10 et s'étend depuis l'entrée E jusque dans la chambre de passage 19. L'extrémité de la tige 13 du côté de la chambre de passage 19 est élargie et forme une embase 130. Le corps 10 comporte un siège 102 au niveau du raccordement entre la chambre de passage 19 et la partie filetée 101. La valve 1 comporte une pièce d'étanchéité 16 annulaire porté par la tige 13 au niveau de l'embase 130 et qui vient en appui sur le siège 102 de manière à obturer le passage entre la chambre de passage 19 et l'entrée E. Dans cette position, l'extrémité de la tige 13 à l'opposé de l'embase 130 affleure l'extrémité de la partie filetée 101. Une bague 18 en matière synthétique isolante est insérée dans la partie filetée 101 et entoure la tige 13 en ménageant un passage entre la bague 18 et la tige 13.

Un capteur 14 à ondes élastiques guidées est fixé sur l'embase 130 à l'extrémité inférieure de la tige 13. Le capteur 14 est ainsi logé dans la chambre de passage 19. Le capteur 14 est en contact électrique avec la tige 13 pour connecter le capteur 14 à un premier élément d'antenne. Par ailleurs, un ressort 15 de type hélicoïdal est logé dans la chambre de passage 19 et prend appui d'une part sur un épaulement 121 de l'embout 12, et d'autre part sur le capteur 14. Le capteur 14 comporte un anneau circulaire 140 conducteur sur lequel le ressort 15 est en appui de manière à être en contact électrique. Le ressort 15 est en contact électrique avec l'embout 12 et forme avec lui et la partie métallique du corps 10 un deuxième élément d'antenne (voir fig. 1).

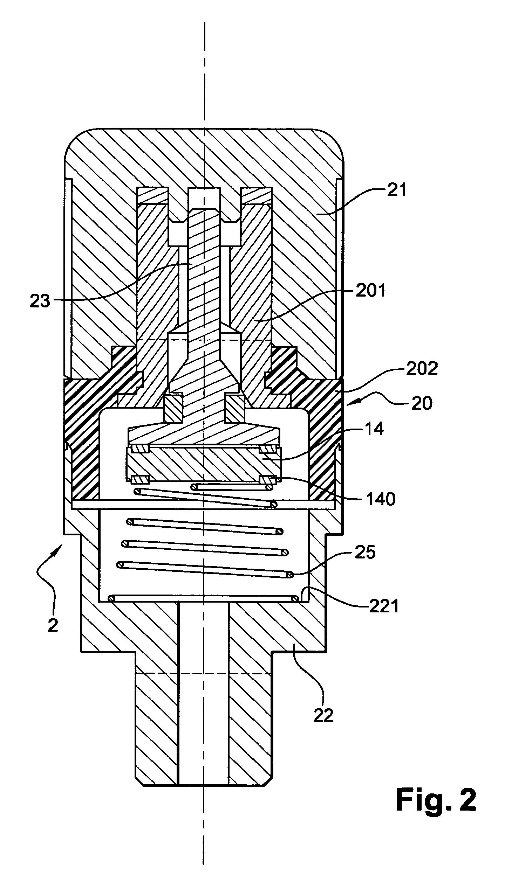

Selon la variante de réalisation représentée sur la figure 2, la valve comporte un embout 22 électriquement conducteur, sur un épaulement 221 duquel le ressort 25 est en appui, l'embout 22 étant fixé sur le corps 20 dans sa partie isolante 202 et complétant le deuxième élément d'antenne.

Le bouchon 11 comporte un corps de bouchon 115 en matière synthétique et un fil conducteur 112 enroulé et noyé dans le corps de bouchon 115. Le bouchon 11 comporte un plot de contact 110 monté de manière élastique dans l'axe de la tige 13 et permettant d'établir une continuité électrique entre la tige 13 et le fil conducteur 112. La tige 13, le plot de contact 110 et le fil conducteur 112 forment ainsi le premier élément d'antenne.

Dans un perfectionnement de ce mode de réalisation, le bouchon 21 est également en matière isolante, et c'est l'ensemble composé de la partie filetée 201 et de la tige 23 qui réalise le premier brin d'antenne.

Lors de l'utilisation de la valve 1, un tuyau d'alimentation, non représenté, est connecté à l'entrée E à la place du bouchon 11. Une action mécanique est exercée ou un fluide sous pression tel que de l'air ou de l'azote est envoyé par l'entrée E, ce qui repousse la tige 13 dans la chambre de passage 19 à l'encontre du ressort 15. Le passage pour le fluide est libéré entre le siège 102 et la pièce d'étanchéité 16 portée par la tige 13. Le fluide traverse l'embout 12 et remplit le réservoir. Lorsque la pression du fluide dans le tuyau d'alimentation est supprimée ou l'action mécanique relâchée, la tige 13 revient en appui sur le siège 102, par l'intermédiaire de la pièce d'étanchéité, par l'action du ressort et du fluide contenu dans le réservoir et ferme le passage du fluide à ce niveau. La chambre de passage 19 est alors soumise à la pression qui règne dans le réservoir.

Le capteur 14, logé dans la chambre de passage 19 est soumis aux même conditions que celles du réservoir. Il est donc en état de mesurer en particulier la pression de fluide dans le réservoir, mais également tout autres grandeurs physiques. Une onde émise par un dispositif de lecture est captée par les deux éléments d'antenne et transmise au capteur 14. En réponse, le capteur 14 retransmet à l'appareil de lecture une onde de réflexion qui est réémise par les deux éléments d'antenne.

Dans un deuxième mode de réalisation de l'invention, montré sur la figure 2, le corps 20 est réalisé en deux matières. La partie filetée 201 est un insert métallique surmoulé par une matière synthétique formant une base 202 du corps 20. Ainsi, l'embout 22, vissé sur la partie en matière synthétique du corps 20, est isolé électriquement de la partie filetée 201. Le bouchon 21 est métallique et est en contact direct avec l'extrémité de la tige 23 ou par l'intermédiaire de la partie filetée 201, côté entrée E. Ainsi, la tige 23, la partie filetée 201 et le bouchon 21 forme le premier élément d'antenne, tandis que le ressort 25 et l'embout 22 forment le deuxième élément d'antenne. Le fonctionnement reste similaire à celui du premier mode de réalisation.

## Revendications

1. Valve incorporant un capteur (14) interrogeable à distance sans connexion filaire, dans laquelle un corps (10, 20) comporte un siège (102), un ensemble mobile comportant une tige (13, 23) formant un clapet avec ledit siège (102), par l'intermédiaire d'une pièce d'étanchéité pour obturer et libérer sur commande un passage de fluide, le capteur (14) étant fixé sur une embase d'extrémité inférieure (130) de la tige (13, 23), un premier élément d'antenne étant logé dans la valve (1, 2) et connecté au capteur (14), **caractérisée en ce qu'**un deuxième élément d'antenne est connecté au capteur (14) et situé à l'opposé du premier élément par rapport au capteur (14), les deux éléments d'antenne étant isolés électriquement.

2. Valve incorporant un capteur (14) interrogeable à distance sans connexion filaire, dans laquelle un corps (10, 20) comporte un siège (102), un ensemble mobile comportant une tige (13, 23) formant un clapet avec ledit siège (102), par l'intermédiaire d'une pièce d'étanchéité pour obturer et libérer sur commande un passage de fluide, le capteur (14) étant fixé sur une embase d'extrémité inférieure (130) de la tige (13, 23), un premier élément d'antenne étant logé dans la valve (1, 2) et connecté au capteur (14), la tige (13, 23) étant conductrice électriquement et connectée électriquement au capteur (14), de manière à former le premier élément d'antenne, **caractérisée en ce qu'**elle comporte un bouchon (11, 21) en matière isolante fixé de manière amovible sur le corps (10, 20), le bouchon comportant un élément conducteur en contact électrique avec la tige (13, 23) de manière à former avec la tige (13, 23) le premier élément d'antenne.

3. Valve selon la revendication 2, dans laquelle le bouchon (21) est métallique et constitue avec la tige (23) le premier élément d'antenne.

4. Valve selon la revendication 2, dans laquelle l'élément conducteur (112) du bouchon (11) comporte un élément élastique (110, 111) pour assurer le contact électrique avec la tige (13).

5. Valve selon la revendication 2, dans laquelle le corps (20) est métallique au moins en partie et constitue, par l'intermédiaire de la tige, le premier élément d'antenne.

6. Valve selon la revendication 1, dans laquelle le corps est isolé de la tige (13) par une bague (18) isolante autour de la tige.

7. Valve selon la revendication 1, dans laquelle l'élément mobile comporte une pièce d'étanchéité (16) en matière isolante interposée entre la tige (13, 23) et le siège (102).

8. Valve selon la revendication 1, dans laquelle le deuxième élément d'antenne comporte un ressort (15, 25) en appui contre le capteur (14) et en contact électrique avec ledit capteur (14).

9. Valve selon la revendication 8, **caractérisée en ce qu'**elle comporte un embout (22) électriquement conducteur, sur un épaulement (221) duquel le ressort (25) est en appui, l'embout (22) étant fixé sur le corps (20) dans sa partie isolante (202) et complétant le deuxième élément d'antenne.

10. Valve selon les revendications 8 et 5, **caractérisé en ce qu'**elle comporte un embout (12) électriquement conducteur sur un épaulement (121) duquel le ressort (15) est en appui, l'embout (12) étant fixé sur la partie métallique du corps (10) et comporte avec celui-ci le deuxième élément d'antenne.

11. Valve selon la revendication 1, dans laquelle le corps comporte une base (202) réalisée en matière isolante électriquement et séparant l'embout (22) du premier élément d'antenne.

## Claims

1. Valve incorporating a sensor (14) which can be remotely interrogated wirelessly, wherein a body (10, 20) comprises a seat (102), a mobile assembly comprising a rod (13, 23) forming a plug with said seat (102), by the intermediary of a sealing component in order to close off and release a fluid passage on command, the sensor (14) being fixed to a base (130) at the lower end of the rod (13, 23), a first antenna element being housed in the valve (1, 2) and connected to the sensor (14), **characterized in that** a second antenna element is connected to the sensor (14) and located opposite the first element in relation to the sensor (14), both antenna elements being insulated electrically.

2. Valve incorporating a sensor (14) which can be remotely interrogated wirelessly, wherein a body (10, 20) comprises a seat (102), a mobile assembly comprising a rod (13, 23) forming a plug with said seat (102), by the intermediary of a sealing component in order to close off and release a fluid passage on command, the sensor (14) being fixed to a base (130) at the lower end of the rod (13, 23), a first antenna element being housed in the valve (1, 2) and connected to the sensor (14), the rod (13, 23) being electrically conductive and connected electrically to the sensor (14), in such a way as to form the first antenna element, **characterized in that** it comprises a plug (11, 21) made of insulating material fixed in a removable manner on the body (10, 20), the plug comprising an conductive element in electrical contact with the rod (13, 23) in such a way as to form with the rod (13, 23) the first antenna element.

3. Valve according to claim 2, wherein the plug (21) is metal and constitutes with the rod (23) the first antenna element.

4. Valve according to claim 2, wherein the conductive element (112) of the stopper (11) comprises an elastic element (110, 111) in order to provide the electrical contact with the rod (13).

5. Valve according to claim 2, wherein the body (20) is made of metal at least in part and constitutes, by the intermediary of the rod, the first antenna element.

6. Valve according to claim 1, wherein the body is insulated from the rod (13) by an insulating ring (18) around the rod.

7. Valve according to claim 1, wherein the mobile element comprises a sealing component (16) made of insulating material inserted between the rod (13, 23) and the seat (102).

8. Valve according to claim 1, wherein the second antenna element comprises a spring (15, 25) pressing against the sensor (14) and in electrical contact with said sensor (14).

9. Valve according to claim 8, **characterized in that** it comprises an electrically conductive tip (22), on a shoulder (221) of which the spring (25) is pressing, the tip (22) being fixed on the body (20) in its insulating portion (202) and supplementing the second antenna element.

10. Valve according to claims 8 and 5, **characterized in that** it comprises an electrically conductive tip (12) on a shoulder (121) of which the spring (15) is pressing, the tip (12) being fixed on the metal portion of the body (10) and comprises with the latter the second antenna element.

11. Valve according to claim 1, wherein the body comprises a base (202) made of an electrically insulating material and separating the tip (22) from the first antenna element.

## Patentansprüche

1. Ventil, umfassend einen Sensor (14), der ohne drahtgebundene Verbindung abfragbar ist, wobei ein Körper (10, 20) einen Sitz (102), eine mobile Einheit, die eine Spindel (13, 23) umfasst, die mit dem Sitz (102) über ein Dichtungsstück eine Klappe bildet, um auf Befehl einen Fluiddurchgang zu verschließen und freizugeben, umfasst, wobei der Sensor (14) auf einem unteren Endsockel (130) der Spindel (13, 23) befestigt ist, wobei ein erstes Antennenelement in dem Ventil (1, 2) untergebracht ist und mit dem Sensor (14) verbunden ist, **dadurch gekennzeichnet, dass** ein zweites Antennenelement mit dem Sensor (14) verbunden ist und sich gegenüber dem ersten Element im Verhältnis zu dem Sensor (14) befindet, wobei die beiden Antennenelemente elektrisch isoliert sind.

2. Ventil, umfassend einen Sensor (14), der ohne drahtgebundene Verbindung abfragbar ist, wobei ein Körper (10, 20) einen Sitz (102), eine mobile Einheit, die eine Spindel (13, 23) umfasst, die mit dem Sitz (102) über ein Dichtungsstück eine Klappe bildet, um auf Befehl einen Fluiddurchgang zu verschließen und freizugeben, umfasst, wobei der Sensor (14) auf einem unteren Endsockel (130) der Spindel (13, 23) befestigt ist, wobei ein erstes Antennenelement in dem Ventil (1, 2) untergebracht ist und mit dem Sensor (14) verbunden ist, wobei die Spindel (13, 23) elektrisch leitfähig ist und elektrisch mit dem Sensor (14) verbunden ist, um das erste Antennenelement zu bilden, **dadurch gekennzeichnet, dass** es einen Stopfen (11, 21) aus Isoliermaterial umfasst, der abnehmbar an dem Körper (10, 20) befestigt ist, wobei der Stopfen ein leitfähiges Element in elektrischem Kontakt mit der Spindel (13, 23) umfasst, um mit der Spindel (13, 23) das erste Antennenelement zu bilden.

3. Ventil nach Anspruch 2, wobei der Stopfen (21) metallisch ist und mit der Spindel (23) das erste Antennenelement bildet.

4. Ventil nach Anspruch 2, wobei das leitfähige Element (112) des Stopfens (11) ein elastisches Element (110, 111) umfasst, um den elektrischen Kontakt mit der Spindel (13) sicherzustellen.

5. Ventil nach Anspruch 2, wobei der Körper (20) mindestens teilweise metallisch ist und über die Spindel das erste Antennenelement bildet.

6. Ventil nach Anspruch 1, wobei der Körper von der Spindel (13) durch einen Isolierring (18) um die Spindel herum isoliert ist.

7. Ventil nach Anspruch 1, wobei das bewegliche Element ein Dichtungsstück (16) aus Isoliermaterial umfasst, das zwischen der Spindel (13, 23) und dem Sitz (102) eingeschoben ist.

8. Ventil nach Anspruch 1, wobei das zweite Antennenelement eine Feder (15, 25) umfasst, die sich an dem Sensor (14) abstützt und mit dem Sensor (14) in elektrischem Kontakt steht.

9. Ventil nach Anspruch 8, **dadurch gekennzeichnet, dass** es ein elektrisch leitfähiges Ansatzstück (22) auf einer Schulter (221) umfasst, auf der sich die Feder (25) abstützt, wobei das Ansatzstück (22) an dem Körper (20) in seinem Isolierteil (202) befestigt ist und das zweite Antennenelement ergänzt.

10. Ventil nach Anspruch 8 und 5, **dadurch gekennzeichnet, dass** es ein elektrisch leitfähiges Ansatzstück (12) auf einer Schulter (121) umfasst, auf der sich die Feder (15) abstützt, wobei das Ansatzstück (12) an dem Metallteil des Körpers (10) befestigt ist und mit diesem das zweite Antennenelement umfasst.

11. Ventil nach Anspruch 1, wobei der Körper eine Basis (202) umfasst, die aus elektrisch isolierendem Material ausgebildet ist und das Ansatzstück (22) von dem ersten Antennenelement trennt.
